# EUROPEAN PATENT APPLICATION

(11) **EP 4 421 664 A1**
(43) Date of publication of application: **28.08.2024**
(21) Application number: 23198486.5
(22) Date of filing: 20.09.2023
(51) Int. Cl.: G06F 21/32, G06F 21/62

(54) **UNAUTHORIZED ACCESS DETECTION SYSTEM AND UNAUTHORIZED ACCESS DETECTION METHOD**

(30) Priority: 24.02.2023 JP 2023027226
(71) Applicant: Hitachi, Ltd., Tokyo 100-8280 (JP)
(72) Inventor: ISHII, Rito, Tokyo, 100-8280 (JP); IMAI, Tsutomu, Tokyo, 100-8280 (JP); MATSUKI, Josuke, Tokyo, 100-8280 (JP)
(74) Representative: MERH-IP Matias Erny Reichl Hoffmann Patentanwälte PartG mbB

(57) **Abstract**

To detect an unauthorized access easily, conveniently, and reliably, an unauthorized access detection system 100 stores data indicating an access destination of an unauthorized access to be detected, detects an access request, determines whether an access source indicated by the access request matches an access source stored in advance and also whether an access destination indicated by the access request matches the data stored, suspends an access to the access destination requested by the access request if it is determined that the access source indicated by the access request matches the access source stored in advance and also that the access destination indicated by the access request matches the data stored, receives an input of biometric information from a user, performs authentication based on the biometric information inputted, and controls the suspended access according to a result of the authentication.

## Description

### CROSS-REFERENCE TO RELATED APPLICATION

This patent application claims priority to Japanese Patent Application No. 2023-027226, filed on February 24, 2023, the entire disclosure of which is incorporated herein by reference.

### BACKGROUND

### Technical Field

The present disclosure relates to an unauthorized access detection system and an unauthorized access detection method.

### Related Art

The number of victims to ransomware has been increasing in recent years. Ransomware invades a target computer and encrypts files and folders on its disk, making those files inaccessible. Typically, the attacker demands a ransom payment in return for decryption.

One example of countermeasures against ransomware is to present a confirmation screen to seek confirmation from a user when an unintended program runs in the computer. However, when such a measure is employed, confirmation is sought from the user so many times depending on the operation of the program that the convenience for the computer is degraded. Also, an input to the confirmation screen may be hijacked by a remote attack virus or a keylogger.

WO2009/022376 discloses a technique that prohibits a user from accessing an encrypted file before the user starts use of the encrypted file, performs authentication processing when the user starts use of the file, and downloads key information into the PC and makes the encrypted file accessible only after the authentication processing succeeds. It is conceivable to prevent access to risky files by applying this technique.

Meanwhile, Japanese Patent Application Publication No. 2005-352961 discloses a system in which an encrypted data file and a corresponding key information file are stored in an IC card, and when the data file is to be opened, the data file is decoded using the key information file after authentication is performed.

Japanese Patent Application Publication No. 2013-8397 discloses an access control program that causes a computer to perform the following processing: Specifically, the computer checks signature information on a certain program, and when no falsification of the program is detected as a result of the signature information check, permits the program to perform file access through encryption using an encryption key unique to the computer.

In WO2009/022376, however, the encrypted file may be doubly encrypted by ransomware, and a risk is therefore involved in using this technique against ransomware. Also, WO2009/022376 needs to perform encryption processing and decryption processing on a file suspected of being related to ransomware and therefore tends to entail high processing load.

Also, because JP 2005-352961 A and JP 2013-8397 A need a key information file and signature information in addition to a data file and a program, respectively, the burden of management of the key information file and the signature information, which are confidential information, is inevitable.

While some countermeasures against ransomware have thus been proposed, currently, not many measures provide both convenience and reliability at the same time.

### SUMMARY

The present disclosure has been conceived in view of the above circumstances and aims to provide an unauthorized access detection system and an unauthorized access detection method capable of detecting unauthorized access easily, conveniently, and reliably.

An aspect of the present disclosure is an unauthorized access detection system including a storage apparatus that stores data indicating an access destination of an unauthorized access to be detected and a control apparatus that executes access request detection processing to detect an access request; access suspension processing to determine whether an access source indicated by the access request matches an access source stored in advance and also whether an access destination indicated by the access request matches the data stored in the storage apparatus and suspend access to the access destination requested by the access request if it is determined that the access source indicated by the access request matches data on the access source stored in advance and also that the access destination indicated by the access request matches the data stored in the storage apparatus; authentication processing to receive an input of biometric information from a user, and/or access control processing to perform authentication based on the biometric information inputted and control the suspended access according to a result of the authentication.

The present disclosure can detect unauthorized access easily, conveniently, and reliably.

Configurations, advantageous effects, and the like not described above will become apparent from the description of the embodiment given below.

### BRIEF DESCRIPTION OF THE DRAWINGS

Fig. 1 is a diagram showing an example configuration of an unauthorized access detection system according to an embodiment of the present disclosure.
Fig. 2 is a diagram showing an example, hardware configuration of an information processing apparatus according to the embodiment.
Fig. 3 is a diagram showing an example of programs and data stored in the information processing apparatus.
Fig. 4 is a flowchart showing an example of unauthorized access detection processing according to the embodiment.
Fig. 5 is a diagram illustrating an example of processing related to process completion:

### DETAILED DESCRIPTION

The following provides a detailed description of an embodiment of the present disclosure with reference to the drawings.

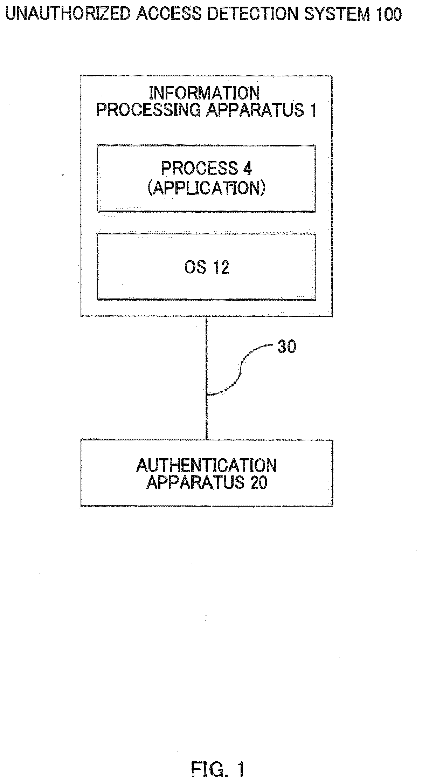

Fig. 1 is a diagram showing an example configuration of an unauthorized access detection system 100 according to the present embodiment. The unauthorized access detection system 100 is configured to include an information processing apparatus 1 and an authentication apparatus 20.

The information processing apparatus 1 is a computer used by one or multiple users. Each user uses the information processing apparatus 1 by logging in to the information processing apparatus 1 using a predetermined account. Note that an account may be shared by multiple users.

The information processing apparatus 1 manages an operating system (OS) 12 and one or a plurality of processes 4 running on the OS 12. The OS 12 activates an application stored in the information processing apparatus 1 in advance and generates, in a memory, a process 4 which is a unit of execution managed by the OS 12. Once the application ends, the corresponding process 4 ends. Although the OS 12 in the present embodiment is Windows (registered trademark), there is no intension of limiting the type of OS thereto, and for example, the OS 12 may be Linux (registered trademark).

The authentication apparatus 20 performs processing for biometric authentication of a user based on an instruction from the information processing apparatus 1. The type of biometric authentication is not limited to any particular one, and examples include blood vessel (vein) authentication, fingerprint authentication, iris authentication, voice authentication, and face authentication. The authentication apparatus 20 is configured of, for example, an imaging device for taking an image of or recognizing a biological object, a light emitting device, a sensor, and the like.

The information processing apparatus 1 and the authentication apparatus 20 may be coupled directly by a communication line 30 or by a wired or wireless communication network such as the Internet, a local area network (LAN), a wide area network (WAN), or a dedicated communication line. Also, the authentication apparatus 20 the information processing apparatus 1 may be configured as a single unit.

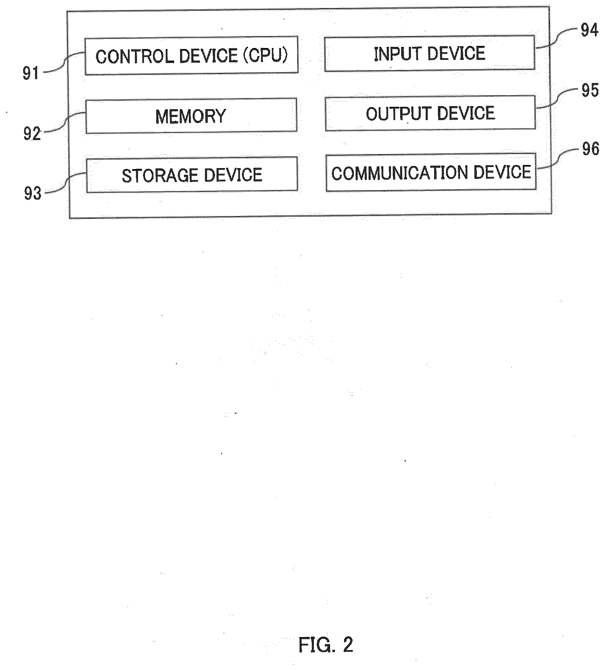

Next, Fig. 2 is a diagram showing an example hardware configuration of the information processing apparatus 1. The information processing apparatus 1 includes a control device 91 such as a central processing unit (CPU), a memory 92 such as a random-access memory (RAM) or a read-only memory (ROM), a storage device 93 such as a hard disk drive (HDD) or a solidstate drive (SSD), an input device 94 such as a keyboard, a mouse, or a touch panel, an output device 95 such as a display or a touch panel, and a communication device 96 configured of, e.g., a network interface card (NIC), a wireless communication module, a universal serial interface (USB) module, or a serial communication module.

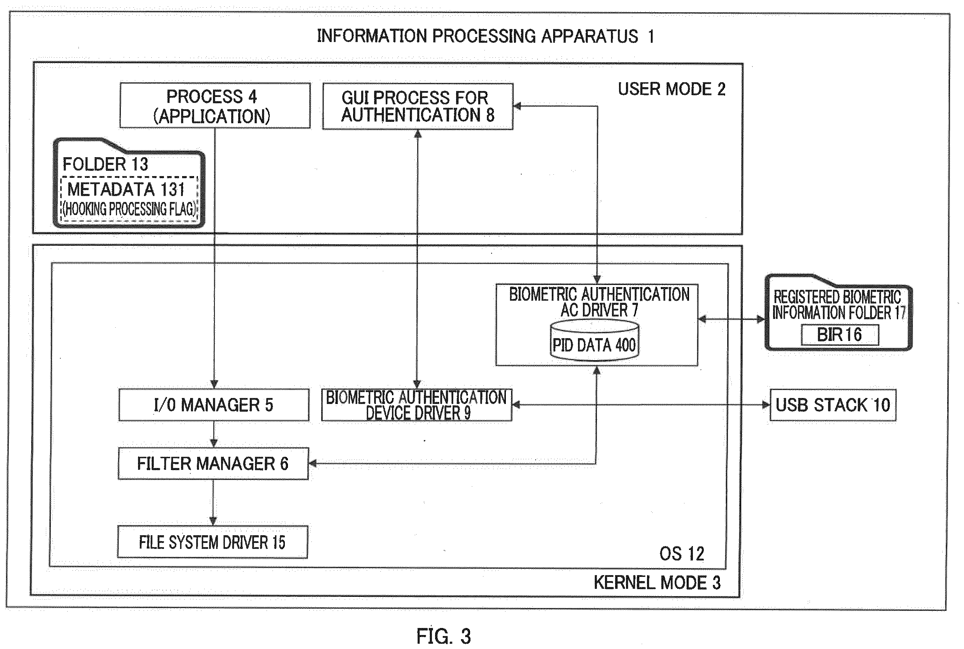

Fig. 3 is a diagram showing an example of programs and data stored in the information processing apparatus 1.

One or a plurality of folders (registered biometric information folders 17) are set in a file system- managed by the OS 12. Reading of data in the registered biometric information folder 17 is not done via a user mode 2 to be described later, but done directly from (a biometric authentication AC driver 7 in) a kernel mode 3 to be described later. Each registered biometric information folder 17 has stored therein a biometric information record (BIR) 16, which is data linking biometric information (registered biometric information) on a user of the information processing apparatus 1 with information on the user (e.g., a user ID).

The BIR 16 is, for example, a user's fingerprint data, blood vessel (vein) data, iris data, voice data, or face data. For example, the BIRs 16 may be introduced after the OS 12 is installed into the information processing apparatus 1 or may be incorporated at the time of manufacturing of the information processing apparatus 1. Note, however, that the BIRs 16 need to be set before the unauthorized access detection system 100 operates. Also, the BIRs 16 may be stored in the storage device 93 or in, e.g., an external database communicatively coupled to the information processing apparatus 1.

The information processing apparatus 1 has programs to be executed in the respective modes (processing spaces): The user mode 2 and the kernel mode 3.

The user mode 2 is a mode in which a program (an application) directly accessed by a user operates. Each program in the user mode 2 can access hardware resources within the scope of permission granted by the OS 12. Processing performed then is executed by the kernel mode 3.

The kernel mode 3 is a processing space in which the kernel operates. A kernel is the core of the OS 12 and mediates data conversion between hardware and software by managing and abstracting various resources. Each program in the kernel mode 3 can access all the resources of the information processing apparatus 1.

In the user mode 2, the information processing apparatus 1 manages one or a plurality of folders 13 in which application files are stored, one or more processes 4 generated by the application in the folder 13, and programs and data in a graphic user interface (GUI) process for authentication 8.

Each folder 13 stores information on the location of (path to) the folder 13. Each folder 13 has zero or more files linked and stored therein. Also, each folder 13 has metadata 131 attached thereto. The metadata 131 includes data indicating that a path to the folder 13 (or to a file in the folder 13) is a target for hooking (processing for detecting an unauthorized access such as ransomware) to be described later (such data is hereinafter referred to as a hooking flag) . Note that similar metadata 131 may be set for each file in the folder 13 as well.

The metadata 131 is set in advance by an administrator or the like of the information processing apparatus 1 for a folder 13 or file targeted for hooking (i.e., targeted for detection of an unauthorized access such as ransomware). The setting of the metadata 131 can be easily executed using, e.g., a function in the OS 12.

Note that the folders 13 may be set in the storage device 93 or in, e.g., an external database communicatively coupled to the information processing apparatus 1 and managed by the OS 12.

The process 4 is a unit of execution of a program in the OS 12, as described earlier. In the present embodiment, the OS 12 stores process IDs (PIDs) to distinguish and manage each of the running processes 4. Alternatively, thread IDs may be used instead of process IDs. Also, the information processing apparatus 1 may use any other types of information for distinguishing application execution units (in a case where, for example, the information processing apparatus 1 does not have the OS 12).

The GUI process for authentication 8 performs processing related to biometric authentication. For example, the GUI process for authentication 8 displays a GUI such as a screen to request a user to provide their biometric information. Also, the GUI process for authentication 8 calls a biometric authentication device driver 9 to be described later and obtains user's biometric information obtained by the authentication apparatus 20. The GUI process for authentication 8 transmits the obtained user's biometric information to the biometric authentication AC driver 7. After that, the GUI process for authentication 8 performs the user's biometric authentication by checking the provided user's biometric information against the biometric information (registered biometric information) in the BIRs 16 stored in advance.

In the kernel mode, the information processing apparatus 1 executes or manages programs or data in an I/O manager 5, a filter manager 6, the biometric authentication device driver 9, the biometric authentication AC driver 7, and a file system driver 15. Note that these programs and data are constituents of the OS 12.

The I/O manager 5 receives an I/O request (a request to access a file in the folder 13) transmitted from the process 4 in the user mode 2, issues an I/O request packet (IRP), which is data on an access request packet corresponding to the I/O request received, and transmits the IRP to the filter manager 6.

The IRP is, for example, "IRP_MJ_CREATE" corresponding to an I/O request for creating a new file or opening a file, "IRP_MJ_WRITE" corresponding to an I/O request for writing data to a file, "IRP_MJ_READ" corresponding to an I/O request for reading a file, or "IRP_MJ_CLEANUP" corresponding to an I/O request for deleting a file.

Note that the I/O manager 5 is not an essential element, and for example, I/O requests may be directly transmitted to the filter manager 6.

The filter manager 6 transmits (issues) the IRP received from the I/O manager 5 to the file system driver 15.

Also, the filter manager 6 calls the biometric authentication AC driver 7. In cooperation with the biometric authentication AC driver 7, the filter manager 6 performs hooking on the IRP received from the I/O manager 5. In other words, upon receipt of the IRP from the I/O manager 5, the filter manager 6 calls the biometric authentication AC driver 7, and the biometric authentication AC driver 7 performs the following processing.

By calling a predetermined function (PsGetCurrentProcessId function), the biometric authentication AC driver 7 obtains the access-source process (PID) related to the IRP. Based on the IRP obtained by the filter manager 6 from the I/O manager 5, the biometric authentication AC driver 7 determines whether the access-source process (PID) matches any of the PIDs in PID data 400 stored in advance in the biometric authentication AC driver 7 and also the accessdestination folder 13 or a path to the folder indicated by the IRP matches any of the metadata 131.

The biometric authentication AC driver 7 manages the PID data 400. in the memory 92. Stored in the PID data 400 while being linked to each other are information on the PID of a process which has been subjected to biometric authentication for an IRP (hereinafter referred to as authenticated process information) and information on the PID of the process permitted to implement the access to the folder 13 requested by the IRP (and having executed the access) as a result of the biometric authentication (hereinafter referred to as accesspermitted process information).

Note that in order for the time for calculation related to data on each PID to be logarithmic time, in the present embodiment, the PID data 400 has a binary tree structure as a data structure for linking pieces of PID data to each other. As a result, the biometric authentication AC driver 7 can shorten the time it takes to search the PID data 400 for a PID. For example, even in a case where there are 1024 processes, the determination as to whether the PID data 400. has a search target PID can be done with a maximum of ten PID comparisons. However, the PID data 400 may also employ a data structure other than the tree structure.

A USB stack 10 controls transmission and reception of data (e.g., biometric information data) to and from the authentication apparatus 20.

Via the USB stack 10, the biometric authentication device driver 9 receives a biometric image obtained by the authentication apparatus 20. The biometric authentication device driver 9 transmits the received biometric image to the GUI process for authentication 8.

The file system driver 15 performs the access requested by the IRP with respect to the folder 13 or a file therein based on the IRP received from the filter manager 6. For example, the file system driver 15 creates a new file or writes data into a file in the folder 13. Note that during the time when the filter manager 6 and the biometric authentication AC driver 7 are performing hooking, the file system driver 15 does not receive an IRP from the filter manager 6 if they are the same thread. Conversely, if they are different threads, the file system driver 15 receives an IRP, but the IRP too is a target to be checked by the biometric authentication AC driver 7. Unless this check is complete, consequently, an IRP_MJ_CREATE request does not reach the file system driver 15, and thus, the process 4 can neither create nor compare files until biometric authentication is completed. In either case, the file system driver 15 cannot access a file or a folder 13.

Each program in the information processing apparatus 1 described above is executed by the control device 91 after being read from the memory 92 or the storage device 93. Also, for example, each program may be recorded in a portable or fixed storage medium and distributed. Note that all or some of these programs may be implemented using virtual information processing resources provided using virtualization technology, process-space separation technology, or the like, for example, a virtual server provided by a cloud system. Also, all or some of these programs may be implemented by, for example, a service provided by a cloud system via an application programming interface (API) or the like.

Next, processing performed by the unauthorized access detection system 100 is described.

### Unauthorized Access Detection Processing

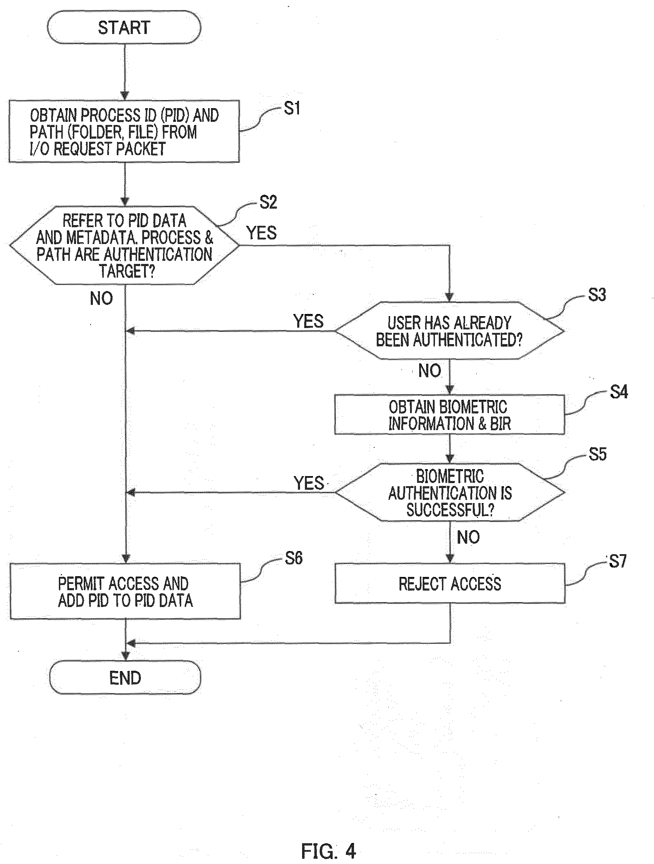

Fig. 4 is a flowchart showing an example of unauthorized access detection processing. The unauthorized access detection processing is, for example, activated by the OS 12 and repeatedly executed by being triggered by access to a file by any process 4.

First, when a generated process 4 tries to access a folder 13, the process 4 transmits an I/O request for implementing this access to the kernel mode 3. The biometric authentication AC driver 7 obtains an IRP corresponding to this I/O request via the filter manager 6 and obtains the PID of the requestor process 4 (hereinafter referred to as a requestor PID) indicated by the IRP obtained and information on the access destination (a folder 13 or a file therein) indicated by the IRP obtained (hereinafter referred to as an access destination path) (S1) (hooking).

Specifically, first, the process 4 transmits an I/O request to the I/O manager 5 through a predetermined system call. The I/O manager 5 generates an IRP corresponding to this I/O request and transmits the generated IRP to the filter manager 6. The filter manager 6 calls the biometric authentication AC driver 7, and the biometric authentication AC driver 7 obtains this IRP and extracts information on the requestor PID and the access destination path from the IRP obtained.

In such hooking, transmission of the IRP from the filter manager 6 to the file system driver 15 is temporarily suspended (access suspension processing). In other words, the IRP based on the process 4 is hooked at the level of the filter manager 6 of the file system. This enables all the processes that go through the I/O manager 5 to be an unauthorized access monitor target irrespective of the type of an API function for applications in the user mode 2. For example, in a case where the OS 12 is Windows (registered trademark), not only when the I/O request is a "CreateFile () function" but also when the I/O request is a "NtCreateFile () system call," an I/O request (IRP) based thereon can be targeted for monitoring. However, because an API function for applications in the user mode 2 may be other than a "CreateFile() function," in this case, the I/O request does not have to be a "NtCreateFile () system call." Also, among API functions for applications in,the user mode 2, ones that go through the I/O manager 5 called by a file creating or opening system call are all targeted for hooking, and thus, other file operating functions such as "fopen () function" can be targeted for monitoring as well.

Based on the requestor PID and the access destination path obtained in S1, the biometric authentication AC driver 7 determines whether to perform authentication processing (S2).

Specifically, the biometric authentication AC driver 7 accesses the access destination, path and obtains the hooking flag in the metadata 131 attached to the folder 13 related to the access destination path.

Then, the biometric authentication AC driver 7 checks whether the obtained hooking flag indicates that authentication processing is necessary. If the hooking flag obtained does not indicate that authentication processing is necessary, the biometric authentication AC driver 7 determines not to perform authentication processing.

Meanwhile, if the hooking flag obtained indicates that authentication processing is necessary, the biometric authentication AC driver 7 further refers to the PID data 400 and checks whether the requestor PID is registered as accesspermitted process information. If the requestor PID is registered, the biometric authentication AC driver 7 determines not to perform authentication processing. If the requestor PID is not registered, the biometric authentication AC driver 7 determines to perform authentication processing.

By the processing above, the biometric authentication AC driver 7 executes processing in S3 if authentication processing is to be performed (S2: YES) and executes processing in S6 if authentication processing is not to be performed (S2: NO).

In S3, the biometric authentication AC driver 7 checks whether the user's biometric authentication has already been done related to the IRP obtained in S1 (S3). Specifically, the biometric authentication AC driver 7 refers to the PID data 400 and checks whether the requestor PID is registered as authenticated process information.

The biometric authentication AC driver 7 performs control according to the result of the biometric authentication in S3 (access control processing). Specifically, the biometric authentication AC driver 7 executes processing in S6 if the user's biometric authentication has already been done for the IRP obtained in S1 (S3: YES) and the biometric authentication AC driver 7 executes the processing in S4 if the user's biometric authentication has not been done yet for the IRP obtained in S1 (S3: NO).

Note that the determination as to whether the user's biometric authentication has already been done may be made for each user, or if user biometric authentication processing has been done for at least one user, then it may be determined that biometric authentication has been done for the other users as well.

In S4, the biometric authentication AC driver 7 calls the GUI process for authentication 8 and obtains user's biometric information via the authentication apparatus 20 and the biometric authentication device driver 9. Also, the biometric authentication AC driver 7 obtains registered biometric information from the BIR 16.

Specifically, first, the biometric authentication AC driver 7 transmits an access notification to the GUI process for authentication 8. Then, the GUI process for authentication 8 performs processing to prompt the user to input biometric information for biometric authentication. For example, the GUI process for authentication 8 displays a predetermined screen on the authentication apparatus 20 or the information processing apparatus 1 and outputs voice, light, a message, or the like.

After that, via the USB stack 10, the biometric authentication device driver 9 causes the authentication apparatus 20 to execute processing to obtain the user's biometric image (for example, transmits an imaging start command to an imaging device in the authentication apparatus 20). The biometric authentication device driver 9 stores the user's biometric image obtained by the authentication apparatus 20 in the memory managed by the biometric authentication device driver 9. The GUI process for authentication 8 obtains the biometric image stored in the memory in the biometric authentication device driver 9. The GUI process for authentication 8 transmits the obtained biometric image to the biometric authentication AC driver 7. Note that after that, the biometric authentication device driver 9 deletes the information stored in the memory (for example, initializes it to 0).

Note that the biometric image obtaining method is not limited to the one described herein. For example, a biometric authentication apparatus as disclosed in Japanese Patent No. 7002348 may be used to capture an image of a finger of a user and process the image captured. Also, because the biometric authentication device driver 9 and the biometric authentication AC driver 7 are running in the same kernel mode 3 and in the same address space, instead of transmitting the biometric image itself, only the beginning address of where the biometric image is stored and the size may be passed to the biometric authentication device driver 9, the GUI process for authentication 8, and the biometric authentication AC driver 7 in this order. Since there is no need to to transmit the image itself, this arrangement offers an advantage of reducing communication volume and an advantage of omitting encryption in transmission of the biometric image.

Then, the biometric authentication AC driver 7 performs biometric authentication based on the biometric information and the registered biometric information obtained in S4 (S5).

Specifically, the biometric authentication AC driver 7 determines whether the pieces of registered biometric information in the BIRs 16 obtained in S4 have one that corresponds to the biometric information obtained in S4. Note that the authentication method is not limited to any particular one. For example, an authentication method like the one disclosed in Japanese Patent No. 5753772 may be employed.

In this way, the biometric authentication AC driver 7 performs biometric authentication on each IRP obtained by the filter manager 6 and performs authentication irrespective of the type of the account logged in to the OS 12. In other words, even in a case where the information processing apparatus 1 is operated with a single account (a case where multiple users share a predetermined account), biometric authentication for unauthorized access detection can be performed without fail for every one of the multiple users using the information processing apparatus 1.

If the biometric authentication is successful (S5: YES), access to the access destination path is permitted (S6).

Specifically, the biometric authentication AC driver 7 executes transmission of the IRP from the filter manager 6 to the file system driver 15. The biometric authentication AC driver 7 also adds and stores the requestor PID in the PID data 400 as authenticated process information and accesspermitted process information. Also, the biometric authentication AC driver 7 stores, in the PID data 400, the biometric information used for authentication. Note that the data stored in the PID data 400 is deleted once the OS 12 ends. The unauthorized access detection processing is then ended.

Note that in a case where the access destination path is a path to the folder 13, the biometric authentication AC driver 7 may permit future access to all the folders 13 (and files therein) of and under the level of the folder 13. Also, in a case where the access destination path is a path to a file, the biometric authentication AC. driver 7 may permit accesses to all the files in the folder 13 to which the above file belongs. Specifically, for example, the biometric authentication AC driver 7 may set a hooking flag in the metadata 131 of the corresponding folder 13 or file or may add, to the PID data 400 or other data, information indicating that access to the corresponding folder 13 or file is permitted.

On the other hand, if the biometric authentication is unsuccessful or the user refuses authentication (S5: NO), the biometric authentication AC driver 7 rejects the access to the access destination path (S7). The unauthorized access detection processing is then ended.

For example, the biometric authentication AC driver 7 transmits a predetermined instruction to the filter manager 6, and the filter manager 6 adds an indication of access rejection to the IRP obtained in S1, and passes the IRP having the indication added thereto to the file system driver 15. As a result of this, access to the folder 13 or file requested by the IRP is prohibited.

Note that, as in S6, in a case where the access destination path is a path to a folder 13, the biometric authentication AC driver 7 may reject access to all the folders 13 (and files therein) of and under the level of the above folder 13. Also, in a case where the access destination path is a path to a file, the biometric authentication AC driver 7 may reject access to all the files in the folder 13 to which the above file belongs. Specifically, for example, the biometric authentication AC driver 7 may set a hooking flag in the metadata 131 of the corresponding folder 13 or file, or add information indicating that access to the corresponding folder 13 or file is prohibited to the PID data 400 or other data.

Note that in a case where a BIR 16 is to be falsely rewritten, a request for the rewrite is the IRP obtained in S1. Thus, the biometric authentication AC driver 7 always executes biometric authentication processing in S5 on such a malicious rewrite of the BIR 16. Thus, the user can learn in advance that the BIR 16 is going to be falsely rewritten and prevent biometric information from being falsely rewritten.

Also, although the biometric authentication AC driver 7 can prohibit or permit all future access to the folder 13 or file by using the PID data 400 in the present embodiment, it is also possible to require the biometric authentication for every access requested by an IRP.

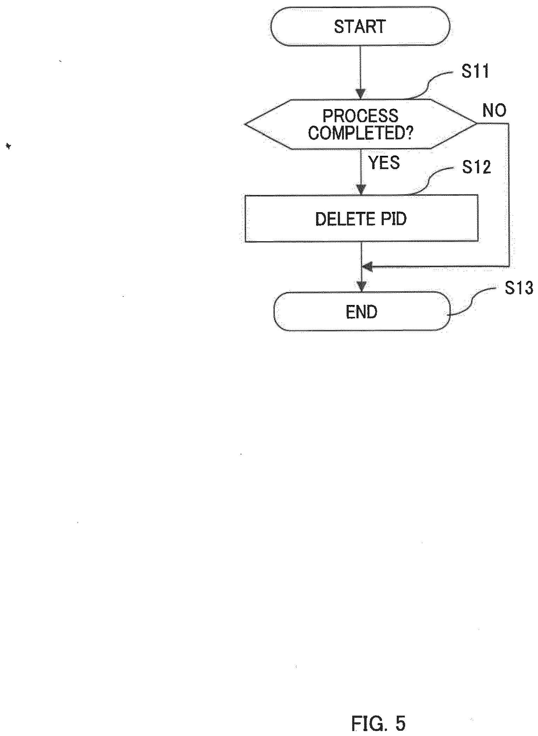

Fig. 5 is a diagram illustrating an example of process completion monitor processing related to completion of a process. The process completion monitor processing is, for example, performed repeatedly after activation of the biometric authentication AC driver 7.

The biometric authentication AC driver 7 continually detects completion of each process upon registration of a predetermined callback function (S11).

Upon detection of process completion (S11: YES), the biometric authentication AC driver 7 deletes, from the PID data 400, the PID related to the process the completion of which has been detected (S12). After that, the process completion monitor processing is ended (S13). If no process completion is detected (S11: NO), the process completion monitor processing is ended (S13).

As described above, the unauthorized access detection system 100 of the present embodiment detects an IRP, and if the access source indicated by the IRP matches data in the PID data 400 and if the access destination indicated by the IRP matches data stored in advance, the unauthorized access detection system 100 suspends the access to the access destination requested by the IRP, receives input of the user's biometric information, and controls the suspended access according to a result of authentication performed based on the inputted biometric information.

Specifically, the unauthorized access detection system 100 of the present embodiment permits access to the access destination requested by the detected IRP when the authentication is successful and prohibits access to the access destination requested by the detected IRP when the authentication is unsuccessful.

More specifically, the unauthorized access detection system 100 suspends access requested by an IRP and performs biometric authentication based on the requestor and the access destination indicated by the IRP, and according to the result of the biometric authentication, performs control of the suspended IRP (permitting or prohibiting the access). In this way, access requested by an IRP can be temporarily suspended with a simple configuration, and unauthorized access can be detected reliably through biometric authentication. In particular, the unauthorized access detection system 100 does not use an input (a yes/no answer) made via the input device 94 or the like in response to asking whether it is authentic or not, but performs biometric authentication using user's unique information, and thus, false authentication (such as information leak) by a remote attack virus or a keylogger attack can be prevented.

In this way, the unauthorized access detection system 100 of the present embodiment can detect an unauthorized access easily, conveniently, and reliably.

Also, the unauthorized access detection system 100 of the present embodiment suspends access to the file or folder 13 requested by the detected IRP if the process 4 requesting the detected IRP matches the access-source process 4 stored in the PID data 400 and if the file or folder 13 at the access destination indicated by the detected IRP matches the file or folder 13 stored in advance.

In this way, when the process 4 is used as a determination-target access source and the folder 13 or file is used as an access destination, unauthorized access such as ransomware can be detected more reliably.

Also, in the present embodiment, a hooking flag is set in the metadata 131 attached to the file or folder 13 to indicate that the file or folder 13 is a target for unauthorized access detection, and the unauthorized access detection system 100 suspends access to the file or folder 13 requested by the detected IRP if the process 4 requesting the detected IRP matches the access-source process 4 stored in the PID data 400 and if it is determined that a hooking flag is set in the above-described metadata 131 of the file or folder 13 being the access destination indicated by the detected IRP.

In this way, by using the metadata attached to the folder 13 to determine whether to suspend access, a determination as to whether determination of an unauthorized access should be performed can be easily and conveniently made irrespective of the type of unauthorized access. Also, processing such as encryption or decryption of ransomware does not need to be performed, which improves processing speed.

Also, if biometric authentication is successful for the detected IRP and if a new IRP for the same access destination as that of the above IRP is detected, the unauthorized access detection system 100 of the present embodiment permits the access requested by the new IRP. If biometric authentication is unsuccessful for the detected IRP and if a new IRP for the same access destination as that of the above IRP is detected, the unauthorized access detection system 100 of the present embodiment prohibits the access requested by the new IRP.

In this way, once safety or riskiness of access to a certain access destination is confirmed, checking of access to the same access destination is omitted from then on, so that processing load related to unauthorized access detection can be reasonably reduced.

The present disclosure is not limited to the above embodiment and can be implemented using any constituent elements without departing from the gist thereof. The embodiment and modifications described above are merely examples, and the present disclosure is not limited thereto as long as the features of the disclosure are not impaired. Also, although various embodiments and modifications have been described above, the present disclosure is not limited thereto. Other conceivable modes within the scope of the technical scope of the present disclosure are also included in the scope of the present disclosure.

For example, some of the hardware in each apparatus of the present embodiment may be provided in a different apparatus.

Also, each program in each apparatus may be provided in a different apparatus, a given program may be formed of a plurality of programs, or a plurality of programs may be integrated into a single program.

Also, although a hooking flag is set in metadata of a folder 13 or file in the present embodiment, -alternatively a named stream may be used. Also, the hooking flag may be other than one set in the metadata of the folder 13 or file and may instead be one attached to any data already set as a function of the OS 12 and linked to the folder 13 or file. This still enables unauthorized access detection without impairing the easiness and convenience.

## Claims

1. An unauthorized access detection system comprising:
a storage apparatus configured to store data indicating an access destination of an unauthorized access to be detected; and
a control apparatus configured to execute
access request detection processing to detect an access request,
access suspension processing to determine whether an access source indicated by the access request matches an access source stored in advance and also whether an access destination indicated by the access request matches the data stored in the storage apparatus and suspend access to the access destination requested by the access request if it is determined that the access source indicated by the access request matches data on the access source stored in advance and also that the access destination indicated by the access request matches the data stored in the storage apparatus,
authentication processing to receive an input of biometric information from a user, and
access control processing to perform authentication based on the biometric information inputted and control the suspended access according to a result of the authentication.

2. The unauthorized access detection system according to claim 1, wherein
in the access control processing, the control apparatus permits the access to the access destination requested by the detected access request if the authentication is successful and prohibits the access to the access destination requested by the detected access request if the authentication is unsuccessful.

3. The unauthorized access detection system according to claim 1, wherein
the storage apparatus stores information on a file or folder which is the access destination as the data indicating an access destination of an unauthorized access to be detected, and
in the access suspension processing, the control apparatus determines whether a process requesting the detected access request matches a process being the access source stored in advance and also whether the file or folder being the access destination indicated by the detected access request matches the file or folder related to the data stored in the storage apparatus, and suspends the access to the file or folder requested by the detected access request if it is determined that the process requesting the detected access request matches the process being the access source stored in advance and also that the file or folder as the access destination indicated by the detected access request matches the file or folder related to the data stored in the storage apparatus.

4. The unauthorized access detection system according to claim 3, wherein
as the data indicating an access destination of an unauthorized access to be detected, information indicating that the file or folder is the access destination of an unauthorized access to be detected is set and attached to the file or folder being the access destination of an unauthorized access to be detected, and
in the access suspension processing, the control apparatus determines whether a process requesting the detected access request matches the process being the access source stored in advance and also whether the file or folder as the access destination indicated by the detected access request matches the file or folder to which the information indicating that the file or folder is the access destination of an unauthorized access to be detected is set, and suspends the access to the file or folder requested by the detected access request if it is determined that the process requesting the detected access request matches the process being the access source stored in advance and also that the file or folder as the access destination indicated by the detected access request matches the file or folder to which the information indicating that the file or folder is the access destination of an unauthorized access to be detected is set.

5. The unauthorized access detection system according to claim 2, wherein
if the authentication is successful, in the access suspension processing, upon detectionof a new access request to a same access destination as the access destination related to the detected access request, the control apparatus permits access requested by the new access request, and
if the authentication is unsuccessful, in the access suspension processing, upon detection of a new access request to a same access destination as the access destination related to the detected access request, the control apparatus prohibits access requested by the new access request.

6. An unauthorized access detection method comprising causing an information processing apparatus configured to store data indicating an access destination of an unauthorized access to be detected to execute:
access request detection processing to detect an access request;
access suspension processing to determine whether an access source indicated by the access request matches an access source stored in advance and also whether an access destination indicated by the access request matches the data stored in the storage apparatus and suspend access to the access destination requested by the access request if it is determined that the access source indicated by the access request matches data on the access source stored in advance and also that the access destination indicated by the access request matches the data stored in the storage apparatus;
authentication processing to receive an input of biometric information from a user; and
access control processing to perform authentication based on the biometric information inputted and control the suspended access according to a result of the authentication.

## Amended claims

### Amended claims in accordance with Rule 137(2) EPC.

1. An unauthorized access detection system comprising:
a storage apparatus configured to store data indicating an access destination of an unauthorized access to be detected; and
a control apparatus configured to execute
access request detection processing to detect an access request,
access suspension processing to determine whether an access source indicated by the access request matches an access source stored in advance and also whether an access destination indicated by the access request matches the data stored in the storage apparatus and suspend access to the access destination requested by the access request if it is determined that the access source indicated by the access request matches data on the access source stored in advance and also that the access destination indicated by the access request matches the data stored in the storage apparatus,
authentication processing to receive an input of biometric information from a user, and
access control processing to perform authentication based on the biometric information inputted and control the suspended access according to a result of the authentication,
wherein
the storage apparatus stores information on a file or folder which is the access destination as the data indicating an access destination of an unauthorized access to be detected, and
in the access suspension processing, the control apparatus determines whether a process requesting the detected access request matches a process being the access source stored in advance and also whether the file or folder being the access destination indicated by the detected access request matches the file or folder related to the data stored in the storage apparatus, and suspends the access to the file or folder requested by the detected access request if it is determined that the process requesting the detected access request matches the process being the access source stored in advance and also that the file or folder as the access destination indicated by the detected access request matches the file or folder related to the data stored in the storage apparatus.

2. The unauthorized access detection system according to claim 1, wherein
in the access control processing, the control apparatus permits the access to the access destination requested by the detected access request if the authentication is successful and prohibits the access to the access destination requested by the detected access request if the authentication is unsuccessful.

3. The unauthorized access detection system according to claim 1, wherein
as the data indicating an access destination of an unauthorized access to be detected, information indicating that the file or folder is the access destination of an unauthorized access to be detected is set and attached to the file or folder being the access destination of an unauthorized access to be detected, and
in the access suspension processing, the control apparatus determines whether a process requesting the detected access request matches the process being the access source stored in advance and also whether the file or folder as the access destination indicated by the detected access request matches the file or folder to which the information indicating that the file or folder is the access destination of an unauthorized access to be detected is set, and suspends the access to the file or folder requested by the detected access request if it is determined that the process requesting the detected access request matches the process being the access source stored in advance and also that the file or folder as the access destination indicated by the detected access request matches the file or folder to which the information indicating that the file or folder is the access destination of an unauthorized access to be detected is set.

4. The unauthorized access detection system according to claim 2, wherein
if the authentication is successful, in the access suspension processing, upon detection of a new access request to a same access destination as the access destination related to the detected access request, the control apparatus permits access requested by the new access request, and
if the authentication is unsuccessful, in the access suspension processing, upon detection of a new access request to a same access destination as the access destination related to the detected access request, the control apparatus prohibits access requested by the new access request.

5. An unauthorized access detection method comprising causing an information processing apparatus configured to store data indicating an access destination of an unauthorized access to be detected to execute:
access request detection processing to detect an access request;
access suspension processing to determine whether an access request matches an access source stored in advance and also whether the file or folder being the access destination indicated by the detected access request matches the file or folder related to data stored in a storage apparatus, and to suspend the access to the file or folder requested by the detected access request if it is determined that the detected access request matches the access source stored in advance and also that the file or folder as the access destination indicated by the detected access request matches a file or folder related to the data stored in the storage apparatus;
authentication processing to receive an input of biometric information from a user; and
access control processing to perform authentication based on the biometric information inputted and control the suspended access according to a result of the authentication.
